# EUROPEAN PATENT APPLICATION

(11) **EP 2 859 986 A1**
(43) Date of publication of application: **15.04.2015**
(21) Application number: 12879057.3
(22) Date of filing: 12.06.2012
(51) Int. Cl.: B23K 26/26, B23K 26/20

(54) **WELDING DEVICE, WELDING METHOD, AND METHOD FOR PRODUCING CELL**

(71) Applicant: Toyota Jidosha Kabushiki Kaisha, Toyota-shi, Aichi 471-8571 (JP)
(72) Inventor: SUGIYAMA Toru, Toyota-shi Aichi 471-8571 (JP); NAKAMURA Hideo, Toyota-shi Aichi 471-8571 (JP); NARUSE Yoichi, Toyota-shi Aichi 471-8571 (JP); SHIBATA Yoshinori, Toyota-shi Aichi 471-8571 (JP)
(74) Representative: TBK
(86) International application number: PCT/JP2012/065046
(87) International publication number: WO 2013/186862

(57) **Abstract**

Provided is a technique by which, in laser welding, the desired weld penetration depth can be achieved without any oxide film lingering in the deep part of a weld pool. Provided is a welding device (1) for emitting a laser focused on a processing point (P). At the processing point, the laser has a profile similar to that of a superimposed laser formed by superimposing a first laser and a second laser having a smaller beam radius than that of the first laser. In the laser profile, a portion corresponding to the first laser has a power density of an extent enabling heat conduction welding, and in the laser profile, a portion corresponding to the second laser has a power density of an extent enabling keyhole welding.

## Description

### Technical Field

The present invention relates to a technique for restraining a welding defect in laser welding.

### Background Art

Conventionally, there is well known laser welding for joining a plurality of base materials to each other by melting a boundary portion of the base materials in contact with each other by a laser beam.

In the laser welding, if metal (for example, aluminum) having a large difference between a melting point of an oxide film formed on the surface thereof and a melting point of a portion thereof (non-oxidized portion) inside the oxide film is used as the base material, because the non-oxidized portion is easily melted although the oxide film is hardly melted directly by the laser beam, a surface tension and a thermal gradient of a molten pool formed by the melted non-oxidized portion generate convection in the molten pool to break the oxide film.

Because force of the above-mentioned convection is decreased toward a deep portion of the molten pool, the oxide film situated in the boundary portion of the base materials may remain in the deep portion of the molten pool without being broken.

Therefore, there is a problem in that a desired penetration depth can hardly be secured.

Patent Literature 1 discloses a technique for irradiating a predetermined portion of a molten pool with a laser beam to remove an oxide film formed on the surface of a base material.

However, the technique described in Patent Literature 1 can hardly remove the oxide film remaining in the deep portion of the molten pool because the surface of the molten pool is irradiated with the laser beam.

### Citation List

### Patent Literature

Patent Literature 1: JP 2012-6028 A

### Summary of Invention

### Problem to Be Solved By the Invention

The objective of the present invention is to provide a technique on laser welding capable of achieving a desired penetration depth without an oxide film remaining in a deep portion of a molten pool.

### Means for Solving the Problem

A first aspect of the invention is a welding device that emits a laser beam focusing on a working point. The laser beam has a profile similar to a profile of a superimposed laser beam at the working point, the superimposed laser beam being formed by superimposing a first laser beam and a second laser beam having a beam diameter smaller than a beam diameter of the first laser beam. A portion, corresponding to the first laser beam, of the profile of the laser beam has a power density allowing thermal-conduction type welding. A portion, corresponding to the second laser beam, of the profile of the laser beam has a power density allowing keyhole type welding.

Preferably, in the profile of the laser beam, a portion where light intensity becomes 50% of a peak has a power density of 2000 kW/cm².

Preferably, in the profile of the laser beam, a position where light intensity is a peak falls within a range of a quarter of the beam diameter of the laser beam from a center of a circle whose diameter corresponds to the beam diameter.

Preferably, in the profile of the laser beam, a full width at half maximum is smaller than or equal to 30% of the beam diameter of the laser beam.

Preferably, in the profile of the laser beam, a portion except an area which occupies 20% of total output of the laser beam and which is calculated from the portion, as a basic point, where light intensity is a peak has total output of 1500 W or more.

Preferably, the welding device further including a first torch that emits the first laser beam, and a second torch that emits the second laser beam. The superimposed laser beam is obtained by focusing the first laser beam and the second laser beam on the working point.

A second aspect of the invention is a welding method for joining a plurality of base materials by a laser beam. The laser beam has a profile similar to a profile of a superimposed laser beam at the working point, the superimposed laser beam being formed by superimposing a first laser beam and a second laser beam having a beam diameter smaller than a beam diameter of the first laser beam. A portion, corresponding to the first laser beam, of the profile of the laser beam has a power density allowing thermal-conduction type welding. A portion, corresponding to the second laser beam, of the profile of the laser beam has a power density allowing keyhole type welding.

Preferably, the plurality of base materials are irradiated with the laser beam so that a position, where light intensity is a peak, of the profile of the laser beam is not located in a boundary portion between the plurality of base materials.

A third aspect of the invention is a method for producing a battery including a case, the case having a storage part with one open face, and a lid part for closing the open face of the storage part, the method including a welding step for joining the storage part and the lid part by a laser beam. The laser beam has a profile similar to a profile of a superimposed laser beam at the working point, the superimposed laser beam being formed by superimposing a first laser beam and a second laser beam having a beam diameter smaller than a beam diameter of the first laser beam. A portion, corresponding to the first laser beam, of the profile of the laser beam has a power density allowing thermal-conduction type welding. A portion, corresponding to the second laser beam, of the profile of the laser beam has a power density allowing keyhole type welding.

Preferably, in the welding step, the storage part and the lid part are irradiated with the laser beam so that a position, where light intensity is a peak, of the profile of the laser beam is located inside the case with respect to a boundary portion between the storage part and the lid part.

### Effects of the Invention

The present invention makes it possible to achieve, during laser welding, a desired penetration depth without an oxide film remaining in a deep portion of a molten pool.

### Brief Description of Drawings

Fig. 1 shows a welding device according to an embodiment of the present invention.
Fig. 2(a) shows a profile of a first laser beam according to a first embodiment of the present invention, and Fig. 2(b) shows a profile of a second laser beam according to the first embodiment of the present invention.
Fig. 3 shows a three-dimensional profile of a superimposed laser beam according to the first embodiment of the present invention.
Fig. 4 shows a two-dimensional profile of the superimposed laser beam according to the first embodiment of the present invention.
Fig. 5 shows a molten pool and a keyhole, which are formed by the superimposed laser beam.
Fig. 6 shows a suitable welding example when a blow hole is formed in a welded portion.
Fig. 7 shows a welding example when the blow hole is formed in the welded portion.
Fig. 8(a) shows a profile of a first laser beam according to a second embodiment of the present invention, and Fig. 8(b) shows a profile of a second laser beam according to the second embodiment of the present invention.
Fig. 9 shows a profile of a superimposed laser beam according to the second embodiment of the present invention.
Fig. 10 shows a profile of a laser beam according to a third embodiment of the present invention.
Fig. 11 shows a battery according to the present invention.
Fig. 12 is a sectional view illustrating a case of the battery according to the present invention.
Fig. 13 is a sectional view showing a state where a storage part of the case is excessively welded.

### Description of Embodiments

### [First embodiment]

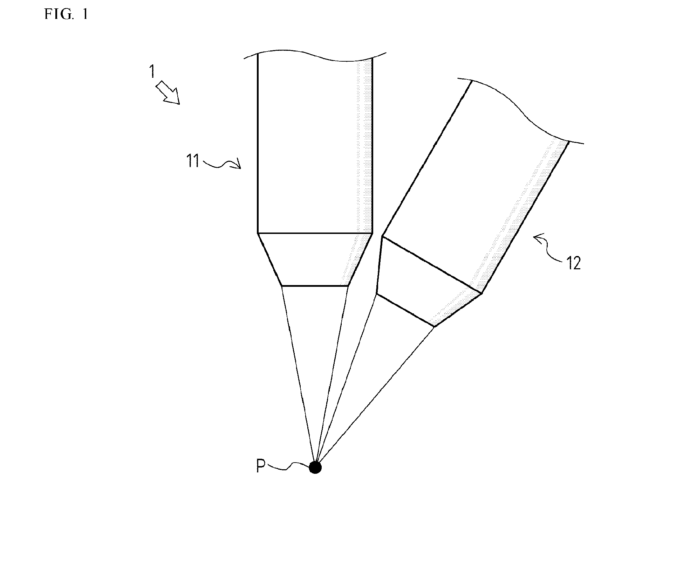

With reference to Figs. 1 to 7, described below is a welding device 1 as a first embodiment of a welding device according to the present invention.

As shown in Fig. 1, the welding device 1 includes a first torch 11 and a second torch 12.

Each of the first torch 11 and the second torch 12 emits a predetermined laser beam, and causes the laser beam to focus on a working point P.

Hereinafter, the laser beam emitted from the first torch 11 is referred to as a "first laser beam", and the laser beam emitted from the second torch 12 is referred to as a "second laser beam".

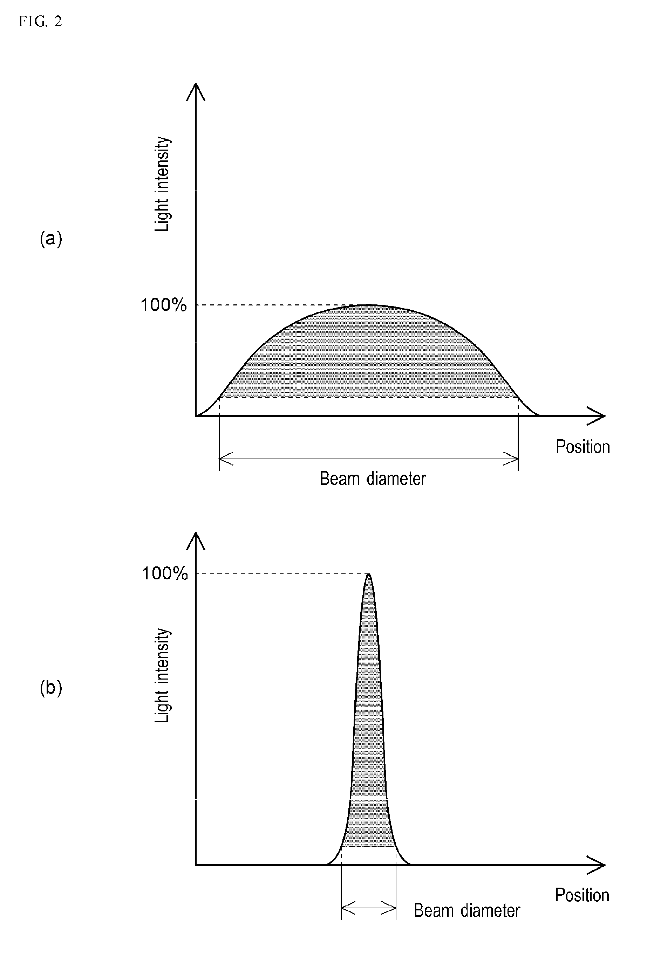

Figs. 2(a) and 2(b) show a profile (light intensity distribution) of the first laser beam at the working point P and a profile (light intensity distribution) of the second laser beam at the working point P, respectively.

In Figs. 2(a) and 2(b), a horizontal axis represents a position, and a vertical axis represents light intensity of each laser beam at the corresponding position.

A beam diameter of each laser beam is defined based on 86.5% of total output of each laser beam. Specifically, in the profile of each laser beam, an area occupying 86.5% of total output of each laser beam is calculated (see hatching-patterned portions in Figs. 2(a) and 2(b)) from a portion, as a basic point, where the light intensity is a peak (100%), and a width of a portion having a minimum light intensity in the area is defined as a beam diameter of each laser beam.

As shown in Figs. 2(a) and 2(b), the beam diameter of the first laser beam is larger than that of the second laser beam. In the present embodiment, the first laser beam has the beam diameter of 0.85 mm, and the second laser beam has the beam diameter of 0.1 mm.

A peak of the light intensity of the first laser beam is lower than a peak of the light intensity of the second laser beam.

The total output (the internal area of the profile in Fig. 2(a)) of the first laser beam is larger than the total output (the internal area of the profile in Fig. 2(b)) of the second laser beam. In the present embodiment, the first laser beam has the total output of 2400 W, and the second laser beam has the total output of 300 W.

The first and second laser beams focusing on the working point P are superimposed at the working point P.

In the present embodiment, the first and second laser beams are superimposed at the working point P so that the beam center of the first laser beam and the beam center of the second laser beam coincide with each other.

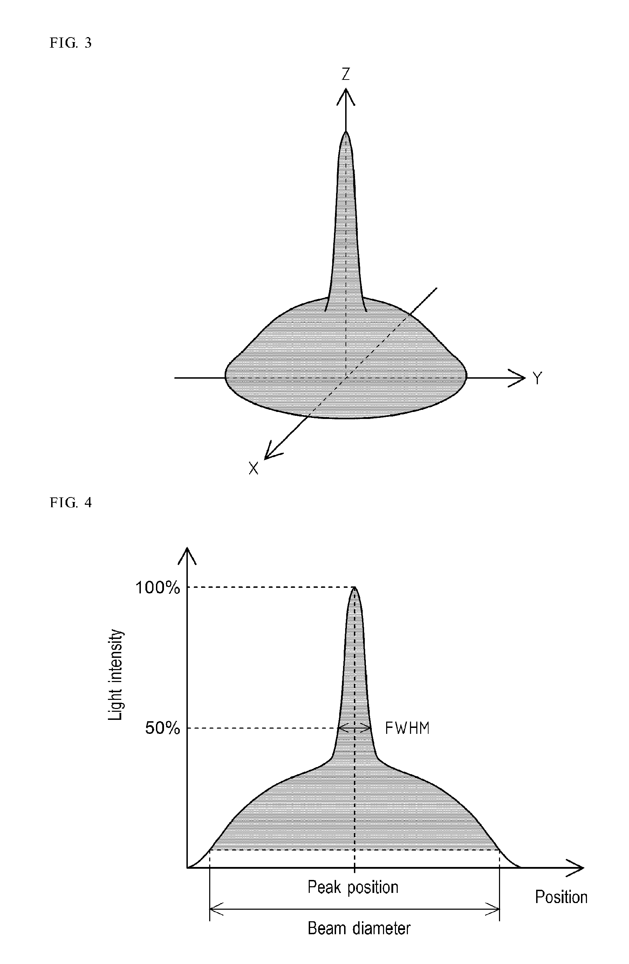

Figs. 3 and 4 show a profile (light intensity distribution) of a laser beam formed by superimposing the first laser beam and the second laser beam at the working point P (hereinafter, referred to as a "superimposed laser beam").

Fig. 3 shows a three-dimensional profile of the superimposed laser beam. In Fig. 3, an x-axis and a y-axis each represent a position, and a z-axis represents the light intensity of the superimposed laser beam at the corresponding position.

Fig. 4 shows a two-dimensional profile of the superimposed laser beam. In Fig. 4, the horizontal axis represents a position, and the vertical axis represents the light intensity of the superimposed laser beam at the corresponding position.

Similarly to the first and second laser beams, the beam diameter of the superimposed laser beam is defined based on 86.5% of the total output of the superimposed laser beam.

In the present embodiment, the superimposed laser beam has the beam diameter of 0.80 mm and the total output of 2700 W.

As shown in Figs. 3 and 4, the profile of the superimposed laser beam has a shape in which the profile of the first laser beam and the profile of the second laser beam substantially overlap with each other. The profile of the superimposed laser beam has a relatively wide portion corresponding to the first laser beam and a relatively narrow portion corresponding to the second laser beam.

In the profile of the superimposed laser beam, the portion corresponding to the first laser beam has a power density allowing thermal-conduction type welding, and the portion corresponding to the second laser beam has a power density allowing keyhole type welding.

Note that the thermal-conduction type welding is a welding method in which the laser beam having a relatively low power density is used. In the thermal-conduction type welding, a base material is melted by heat of the laser beam absorbed into the surface of the base material.

Note that the keyhole type welding is a welding method in which the laser beam having a relatively high power density is used. In the keyhole type welding, the welding is performed using a hole (keyhole) formed in a molten pool by a pressure of metallic vapor.

Described below is an effect obtained in the case where a first workpiece W1 and a second workpiece W2 are welded with the welding device 1 capable of foiming the superimposed laser beam.

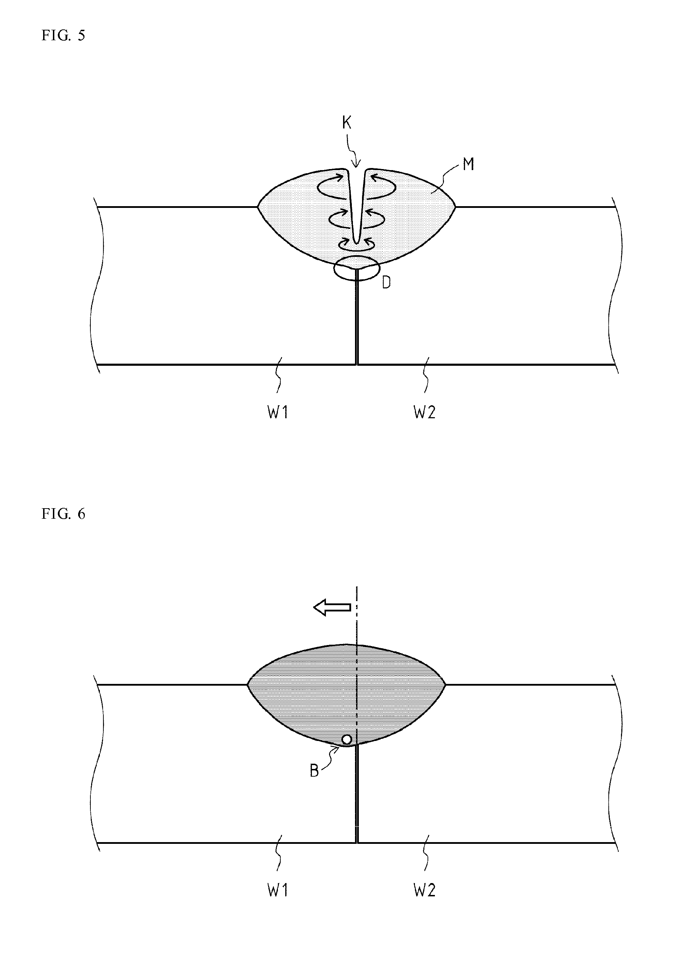

As shown in Fig. 5, the first workpiece W1 and the second workpiece W2 are objects to be welded by the welding device 1, and are formed in flat plates. The first workpiece W1 and the second workpiece W2 are arranged so that one side surface (right end face in Fig. 5) of the first workpiece W1 comes in contact with one side surface (left end face in Fig. 5) of the second workpiece W2.

When the first workpiece W1 and the second workpiece W2 are welded with the welding device 1, a molten pool M is formed in portions irradiated with the superimposed laser beam in the first workpiece W1 and the second workpiece W2, and a keyhole K is formed in the molten pool M.

As mentioned previously, since the profile of the superimposed laser beam includes the portion, having the power density allowing the thermal-conduction type welding, corresponding to the first laser beam, the molten pool M having a size corresponding to the beam diameter of the superimposed laser beam is formed in the portions irradiated with the superimposed laser beam in the first workpiece W1 and the second workpiece W2.

Moreover, since the profile of the superimposed laser beam includes the portion, having the power density allowing the keyhole type welding, corresponding to the second laser beam, the keyhole K is formed in the molten pool M.

Each of the first workpiece W1 and the second workpiece W2 is made of a material mainly containing aluminum, and an oxide film (alumina) is formed on the surface of each workpiece. Alumina that is of the oxide film of each workpiece has a melting point of approximately 2020°C, and the melting point of alumina is higher than the melting point (approximately 660°C) of aluminum.

For this reason, generally the oxide film of each workpiece is hardly melted directly by the laser beam. Since force of a thermal convection is small in a deep portion (portion surrounded by an ellipse D in Fig. 5) of the molten pool M, the oxide film of each workpiece is hardly broken by thermal convection.

However, using the superimposed laser beam makes the keyhole K in the molten pool M while foiming the molten pool M having the size corresponding to the beam diameter of the superimposed laser beam. The molten pool M is stirred by the keyhole K made by the pressure of the metallic vapor.

Therefore, even in the deep portion of the molten pool M, the molten metal flows, thus enabling to suitably break the oxide film of each workpiece.

This makes it possible to achieve a desired penetration depth without the oxide film remaining in the deep portion of the molten pool M.

In the present embodiment, the material mainly containing aluminum is used as the materials of the first workpiece W1 and the second workpiece W2. However, there is no limitation to the materials of the first workpiece W1 and the second workpiece W2. In particular, metal having a large difference between the melting point of the oxide film formed on the surface thereof and the melting point of the portion thereof (non-oxidized portion) inside the oxide film is preferably used in the present invention.

In the general keyhole type welding, the desired penetration depth is achieved by the keyhole, but in the present invention, the keyhole K is formed in order to stir the molten pool M after the molten pool M having such a size that the desired penetration depth (without consideration for the oxide film) can be secured.

Therefore, the profile of the superimposed laser beam is not limited as long as the molten pool M having such a size that the desired penetration depth (without consideration for the oxide film) can be secured and the keyhole K capable of stirring the molten pool M can be formed.

In particular, in the profile of the superimposed laser beam, preferably the portion where the light intensity is 50% of the peak (see Fig. 4) has the power density of 2000 kW/cm² or more.

This means that, in the profile of the superimposed laser beam, the portion corresponding to the second laser beam is the profile capable of forming the keyhole K in the molten pool M. The keyhole K capable of stirring the molten pool M is formed, thus enabling to suitably break the oxide film remaining in the deep portion of the molten pool M.

In the present embodiment, the portion where the light intensity is 50% of the peak in the profile of the superimposed laser beam has the power density of 4000 kW/cm².

In the profile of the superimposed laser beam, preferably the position of the peak light intensity (hereinafter, referred to as a "peak position") falls within a range of a quarter of the beam diameter from the center of a circle whose diameter corresponds to the beam diameter.

This means that, in the profile of the superimposed laser beam, the portion corresponding to the second laser beam is situated in the vicinity of the center of the profile of the superimposed laser beam. The keyhole K is formed in the vicinity of the center of the molten pool M, thus enabling to efficiently stirring the molten pool M.

In the present embodiment, as mentioned previously, since the first laser beam and the second laser beam are superimposed at the working point P so that the beam center of the first laser beam and the beam center of the second laser beam coincide with each other, the peak position in the profile of the superimposed laser beam coincides with the center of the circle whose diameter corresponds to the beam diameter in the profile of the superimposed laser beam.

In the profile of the superimposed laser beam, preferably a full width at half maximum (hereinafter, referred to as a "FWHM") is smaller than or equal to 30% of the beam diameter (a condition of 0 < (FWHM /beam diameter) ≤ 0.3 holds). The FWHM means a width of the portion where the light intensity is 50% of the peak in the profile of the laser beam (see Fig. 4).

This represents a condition of a ratio of the width of the portion corresponding to the second laser beam to the width of the portion corresponding to the first laser beam in the profile of the superimposed laser beam. The size of the molten pool M is proportional to the width of the portion corresponding to the first laser beam in the profile of the superimposed laser beam, and the size of the keyhole K is proportional to the width of the portion corresponding to the second laser beam in the profile of the superimposed laser beam. If the keyhole K is excessively large with respect to the molten pool M, part of the molten pool M may scatter to lead to a welding defect.

Therefore, preferably the FWHM is smaller than or equal to 30% of the beam diameter in the profile of the superimposed laser beam.

In the present embodiment, because the FWHM is 0.05 mm and the beam diameter is 0.80 mm, FWHM/beam diameter is 0.0625.

Preferably the portion except the area which occupies 20% of the total output of the superimposed laser beam and which is calculated from the portion, as a basic point, where the light intensity is a peak (100%) has the total output of 1500 W or more in the profile of the superimposed laser beam.

This means that, the portion corresponding to the first laser beam in the profile of the superimposed laser beam is a profile capable of foiming the molten pool M having such a size that the desired penetration depth (without consideration for the oxide film) can be secured.

In the present embodiment, the total output of the portion is 2160 W.

The first and second laser beams constituting the superimposed laser beam may be either a continuous wave or a pulse wave.

In the case where at least one of the laser beams is the pulse wave, the profile of the superimposed laser beam needs to become the shape in Figs. 3 and 4 during pulse output.

As shown in Fig. 6, when being welded with the welding device 1, preferably the first workpiece W1 and the second workpiece W2 are irradiated with the superimposed laser beam so that the peak position in the profile of the superimposed laser beam is not located in the boundary portion (contact surface of each workpiece) between the first workpiece W1 and the second workpiece W2.

Generally the keyhole is formed at a position corresponding to the peak position in the profile of the laser beam. A blow hole (pore) that may remain in the welded portion after the welding is formed at the position where the keyhole is formed during the welding.

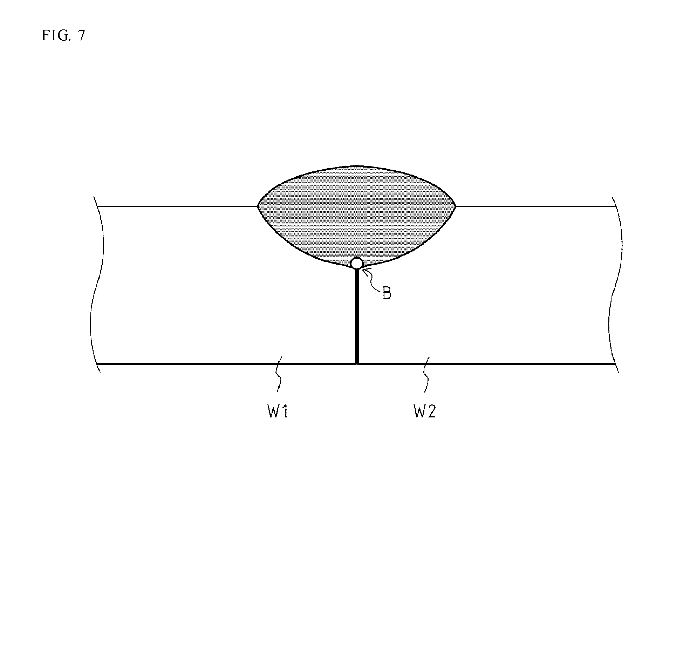

As shown in Fig. 7, in the case where the first workpiece W1 and the second workpiece W2 are irradiated with the superimposed laser beam so that the peak position in the profile of the superimposed laser beam is located in the boundary portion between the first workpiece W1 and the second workpiece W2, the blow hole is coupled with a minute gap in the boundary portion. As a result, the penetration depth may become smaller than a desired value, which results in a risk of degrading strength of the welded portion.

On the other hand, as shown in Fig. 6, the peak position in the profile of the superimposed laser beam is shifted from the boundary portion between the first workpiece W1 and the second workpiece W2 by a predetermined distance (for example, 0.2 mm), thus enabling to restrain the degradation of the strength in the welded portion without the blow hole coupling with the minute gap in the boundary portion.

### [Second embodiment]

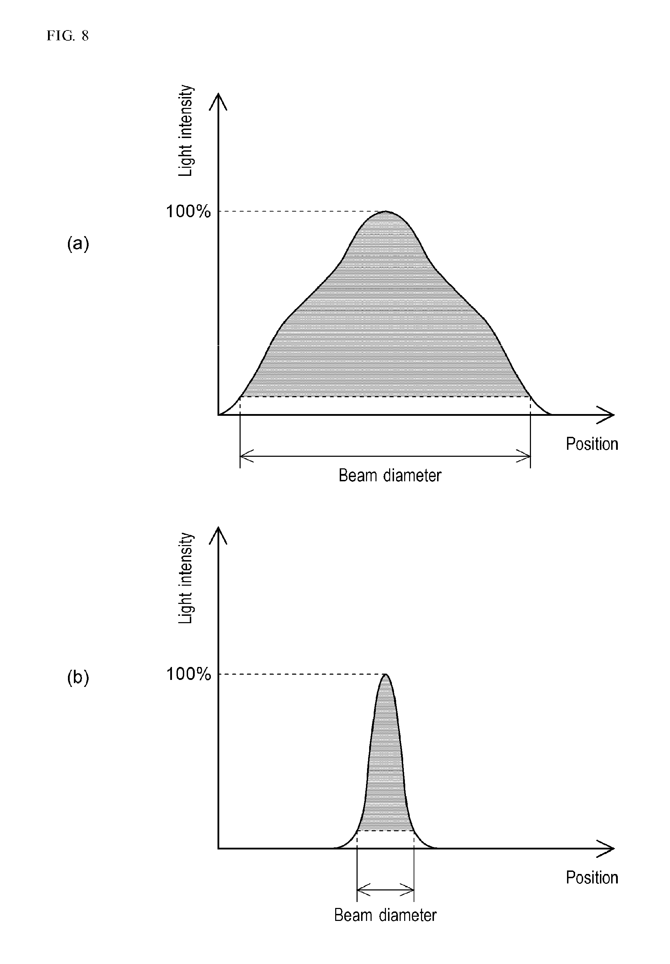

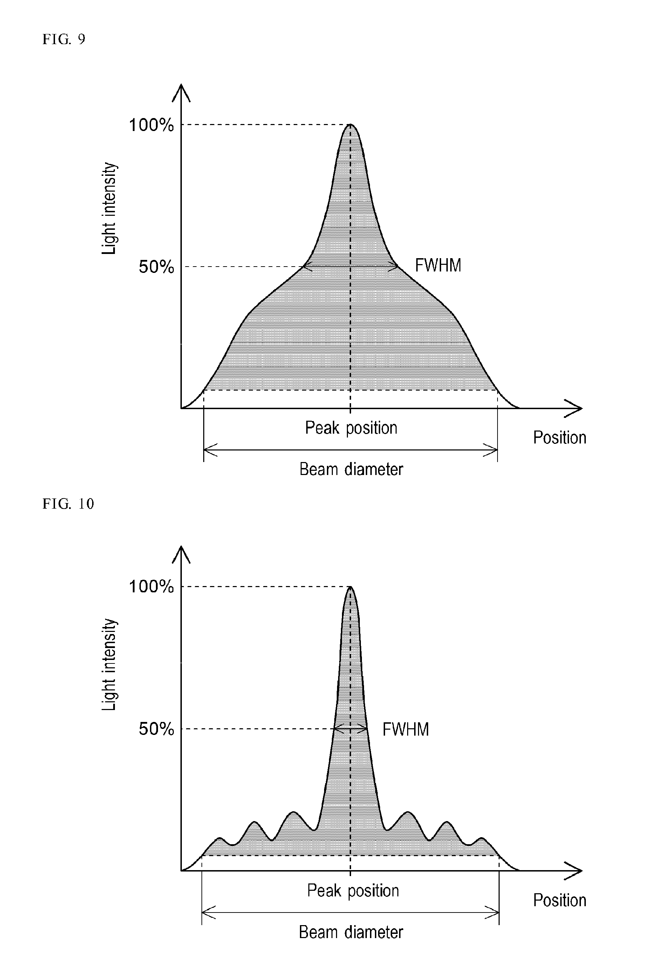

With reference to Figs. 8 and 9, described below is a welding device 2 as a second embodiment of a welding device according to the present invention.

The welding device 2 includes a first torch 21 and a second torch 22 (not shown).

The first torch 21 and the second torch 22 are formed similarly to the first torch 11 and second torch 12 in the welding device 1, and cause a predetermined laser beam to focus on the working point P.

Hereinafter, the laser beam emitted from the first torch 21 is referred to as a "first laser beam", and the laser beam emitted from the second torch 22 is referred to as a "second laser beam".

Figs. 8(a) and 8(b) show a profile (light intensity distribution) of the first laser beam at the working point P and a profile (light intensity distribution) of the second laser beam at the working point P, respectively.

In Figs. 8(a) and 8(b), the horizontal axis represents the position, and the vertical axis represents the light intensity of each laser beam at the corresponding position.

As shown in Figs. 8(a) and 8(b), the beam diameter of the first laser beam is larger than that of the second laser beam. In the present embodiment, the first laser beam has the beam diameter of 0.45 mm, and the second laser beam has the beam diameter of 0.1 mm.

The peak of the light intensity of the first laser beam is higher than that of the light intensity of the second laser beam.

The total output (the internal area of the profile in Fig. 8(a)) of the first laser beam is larger than the total output (the internal area of the profile in Fig. 8(b)) of the second laser beam. In the present embodiment, the first laser beam has the total output of 2100 W, and the second laser beam has the total output of 150 W.

The first and second laser beams focusing on the working point P are superimposed at the working point P.

In the present embodiment, the first and second laser beams are superimposed at the working point P so that the beam center of the first laser beam and the beam center of the second laser beam coincide with each other.

Fig. 9 shows a profile (light intensity distribution) of the superimposed laser beam formed by superimposing the first and second laser beams at the working point P.
Fig. 9 shows the profile of the superimposed laser beam. In Fig. 9, the horizontal axis represents the position, and the vertical axis represents the light intensity of the superimposed laser beam at the corresponding position.
In the present embodiment, the superimposed laser beam has the beam diameter of 0.42 mm and the total output of 2250 W.

In the profile of the superimposed laser beam in the present embodiment, the portion where the light intensity is 50% of the peak has the power density of 2100 kW/cm².

In the profile of the superimposed laser beam in the present embodiment, because the FWHM is 0.1 mm and the beam diameter is 0.42 mm, FWHM/beam diameter is 0.238.

The portion except the area which occupies 20% of the total output of the superimposed laser beam and which is calculated from the portion, as a basic point, where the light intensity is a peak (100%) has the total output of 1800 W in the profile of the superimposed laser beam in the present embodiment.

The superimposed laser beam having the above-mentioned profile, similarly to the superimposed laser beam formed by the welding device 1, makes it possible to achieve a desired penetration depth without the oxide film remaining in the deep portion of the molten pool when the plurality of base materials are welded.

### [Third embodiment]

With reference to Fig. 10, described below is a welding device 3 as a third embodiment of a welding device according to the present invention.

The welding device 3 includes a diffractive optical element (DOE) (not shown). The welding device 3 is configured to emit the laser beam having the desired profile at the working point P with the DOE.

A galvano-scanner may be used as the welding device 3 in addition to the torch generally used in the laser welding. Preferably the galvano-scanner is used as the welding device 3 from the viewpoint of improvement of a welding speed and flexibility of a scanning locus.

Hereinafter, the laser beam emitted from the welding device 3 is referred to as a "single laser beam".

Fig. 10 shows a profile (light intensity distribution) of the single laser beam.

Fig. 10 shows the profile of the single laser beam. In Fig. 10, the horizontal axis represents the position, and the vertical axis represents the light intensity of the single laser beam at the corresponding position.

In the present embodiment, the single laser beam has the beam diameter of 0.8 mm and the total output of 2200 W.

In the profile of the single laser beam in the present embodiment, the portion where the light intensity is 50% of the peak has the power density of 3500 kW/cm².

In the profile of the single laser beam in the present embodiment, the peak position coincides with the center of the circle whose diameter corresponds to the beam diameter.

In the profile of the single laser beam in the present embodiment, because the FWHM is 0.05 mm and the beam diameter is 0.8 mm, FWHM/beam diameter is 0.0625.

The portion except the area which occupies 20% of the total output of the superimposed laser beam and which is calculated from the portion, as a basic point, where the light intensity is a peak (100%) has the total output of 1760 W in the profile of the single laser beam in the present embodiment.

Since the welding device 3 includes the DOE, the welding device 3 can form the single laser beam having the profile similar to that of the superimposed laser beam formed by the welding device 1 or 2.

This makes it possible to achieve a desired penetration depth without the oxide film remaining in the deep portion of the molten pool when the plurality of base materials are welded with the welding device 3.

Note that "the profile similar to that of the superimposed laser beam" includes not only the profile completely identical to that of the superimposed laser beam but also the profile of the laser beam exerting the effect identical to that of the superimposed laser beam such as the single laser beam formed by the welding device 3.

The single laser beam may be either a continuous wave or a pulse wave.

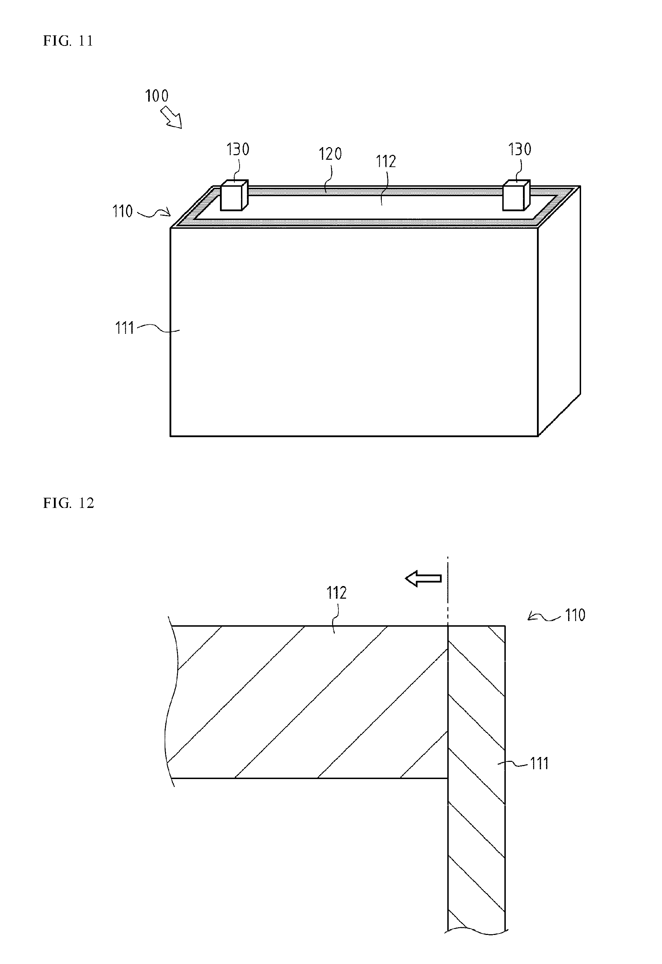

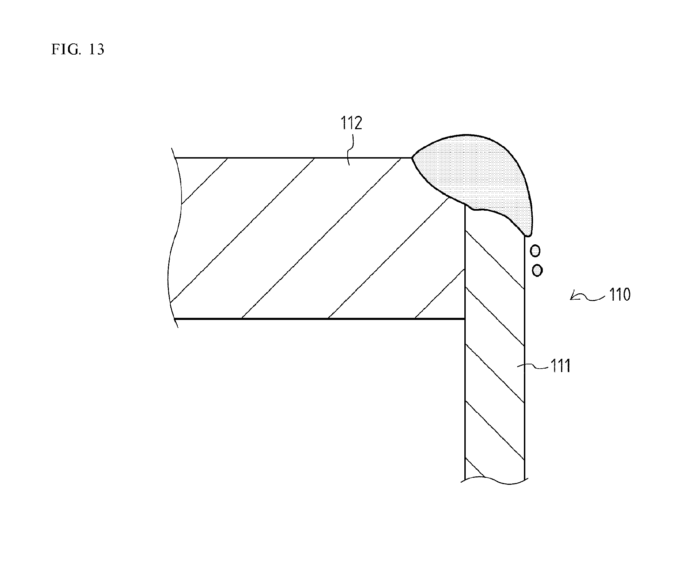

With reference to Figs. 11 to 13, described below is a step for producing a battery 100 as an embodiment of a method for producing a battery according to the present invention.

The step for producing the battery 100 includes a welding step in which the welding device 1 is used.

First, the battery 100 is described below.

The battery 100 is a sealed-type battery.

As shown in Fig. 8, the battery 100 includes a case 110.

The case 110 is a container in which an electrode body (not shown) is stored together with an electrolyte solution, and is an object to be welded by the welding device 1.

The electrode body is formed by laminating and winding a pair of electrodes (positive and negative electrodes) formed in a sheet shape with a separator interposed therebetween. The electrode body is impregnated with the electrolyte solution, thereby acting as a power-generating element.

The case 110 includes a storage part 111 and a lid part 112.

The storage part 111 is a box having a substantially rectangular parallelepiped shape, and one surface (top face in Fig. 8) of the storage part 111 is open. The electrode body and the electrolyte solution are stored in the storage part 111.

The lid part 112 is a flat plate that closes the open surface of the storage part 111. The lid part 112 has a shape corresponding to the open surface of the storage part 111, and is arranged to come into contact with an inner surface of the storage part 111. The lid part 112 is joined to the storage part 111 by the laser welding using the welding device 1. Specifically, the boundary portion between the lid part 112 and the storage part 111 is melted by the superimposed laser beam emitted from the welding device 1. Then, the molten portion is solidified to form a welded portion 120, and the lid part 112 and the storage part 111 are joined to each other.

The lid part 112 has two openings into which two terminals 130 are inserted, and the terminals 130 are fixed to the openings.

The terminals 130 are members electrically connected to the electrode body.

In one of the terminals 130, one end is electrically connected to the positive electrode of the electrode body, and the other end is arranged to protrude from the lid part 112 toward the outside of the case 110.

In the other terminal 130, one end is electrically connected to the negative electrode of the electrode body, and the other end is arranged to protrude from the lid part 112 toward the outside of the case 110.

In the step for producing the battery 100, the welding step is performed after the electrode body is stored in the storage part 111 of the case 110.

The welding step includes performing the laser welding with respect to the case 110 using the welding device 1.

In the welding step, the storage part 111 and the lid part 112 are welded with the welding device 1 while filling the open surface of the storage part 111 with the lid part 112.

As shown in Fig. 9, when the storage part 111 and the lid part 112 are welded with the welding device 1, preferably the storage part 111 and the lid part 112 are irradiated with the superimposed laser beam so that the peak position in the profile of the superimposed laser beam is located inside (left side in Fig. 9) the case 110 with respect to the boundary portion between the storage part 111 and the lid part 112.

Specifically, the peak position in the profile of the superimposed laser beam is preferably shifted inward of the case 110 from the boundary portion between the storage part 111 and the lid part 112 along the surface of the case 110 (upper end face of the case 110 in Fig. 9) irradiated with the superimposed laser beam.

As mentioned previously, the peak position in the profile of the superimposed laser beam is shifted from the boundary portion between the storage part 111 and the lid part 112, thus enabling to restrain the degradation of the strength of the welded portion 120 in the case where the blow hole remains in the welded portion 120.

However, as shown in Fig. 10, if the peak position in the profile of the superimposed laser beam is shifted from the boundary portion between the storage part 111 and the lid part 112 to the outside (right side in Fig. 10) of the case 110, the molten metal may drop due to the excessively-melted storage part 111.

The reason is that the portion of the storage part 111 melted by the superimposed laser beam is a corner of the case 110. In the corner, the heat does not escape to atmosphere with thermal conductivity lower than that of the case 110 and easily stays during the welding.

Another reason is that a thickness (a horizontal dimension in Fig. 10) of the storage part 111 is smaller than a thickness (a vertical dimension in Fig. 10) of the lid part 112.

Therefore, the peak position in the profile of the superimposed laser beam is shifted from the boundary portion between the storage part 111 and the lid part 112 to the inside of the case 110, thus enabling to restrain the storage part 111 from excessively melting.

In the welding step, the welding device 2 or the welding device 3 may be used instead of the welding device 1.

### Industrial Applicability

The present invention is applicable to a technique for restraining a welding defect in laser welding.

### Reference Signs List

- 1:: welding device
- 11:: first torch
- 12:: second torch
- 100:: battery
- 110:: case
- 111:: storage part
- 112:: lid part
- 120:: welded portion

## Claims

1. A welding device that emits a laser beam focusing on a working point, wherein
the laser beam has a profile similar to a profile of a superimposed laser beam at the working point, the superimposed laser beam being formed by superimposing a first laser beam and a second laser beam having a beam diameter smaller than a beam diameter of the first laser beam,
a portion, corresponding to the first laser beam, of the profile of the laser beam has a power density allowing thermal-conduction type welding, and
a portion, corresponding to the second laser beam, of the profile of the laser beam has a power density allowing keyhole type welding.

2. The welding device according to claim 1, wherein
in the profile of the laser beam, a portion where light intensity becomes 50% of a peak has a power density of 2000 kW/cm².

3. The welding device according to claim 1 or 2, wherein
in the profile of the laser beam, a position where light intensity is a peak falls within a range of a quarter of the beam diameter of the laser beam from a center of a circle whose diameter corresponds to the beam diameter.

4. The welding device according to any one of claims 1 to 3, wherein
in the profile of the laser beam, a full width at half maximum is smaller than or equal to 30% of the beam diameter of the laser beam.

5. The welding device according to any one of claims 1 to 4, wherein
in the profile of the laser beam, a portion except an area which occupies 20% of total output of the laser beam and which is calculated from the portion, as a basic point, where light intensity is a peak has total output of 1500 W or more.

6. The welding device according to any one of claims 1 to 5, further comprising:
a first torch that emits the first laser beam; and
a second torch that emits the second laser beam,
wherein the superimposed laser beam is obtained by focusing the first laser beam and the second laser beam on the working point.

7. A welding method for joining a plurality of base materials by a laser beam, wherein
the laser beam has a profile similar to a profile of a superimposed laser beam at the working point, the superimposed laser beam being formed by superimposing a first laser beam and a second laser beam having a beam diameter smaller than a beam diameter of the first laser beam,
a portion, corresponding to the first laser beam, of the profile of the laser beam has a power density allowing thermal-conduction type welding, and
a portion, corresponding to the second laser beam, of the profile of the laser beam has a power density allowing keyhole type welding.

8. The welding method according to claim 7, wherein
the plurality of base materials are irradiated with the laser beam so that a position, where light intensity is a peak, of the profile of the laser beam is not located in a boundary portion between the plurality of base materials.

9. A method for producing a battery including a case, the case having a storage part with one open face, and a lid part for closing the open face of the storage part, the method comprising:
a welding step for joining the storage part and the lid part by a laser beam, wherein
the laser beam has a profile similar to a profile of a superimposed laser beam at the working point, the superimposed laser beam being formed by superimposing a first laser beam and a second laser beam having a beam diameter smaller than a beam diameter of the first laser beam,
a portion, corresponding to the first laser beam, of the profile of the laser beam has a power density allowing thermal-conduction type welding, and
a portion, corresponding to the second laser beam, of the profile of the laser beam has a power density allowing keyhole type welding.

10. The method according to claim 9, wherein
in the welding step,
the storage part and the lid part are irradiated with the laser beam so that a position, where light intensity is a peak, of the profile of the laser beam is located inside the case with respect to a boundary portion between the storage part and the lid part.
